# EUROPÄISCHE PATENTSCHRIFT

(11) **EP 0 681 099 B1**
(45) Veröffentlichungstag und Bekanntmachung des Hinweises auf die Patenterteilung: **01.08.2001**
(21) Anmeldenummer: 95810258.4
(22) Anmeldetag: 19.04.1995
(51) Int. Cl.: F02C 3/32, F01K 21/04

(54) **Kraftwerksanlage**
Gasturbine power station
Centrale à turbine à gaz

(30) Priorität: 02.05.1994 DE 4415315
(43) Veröffentlichungstag der Anmeldung: 08.11.1995
(73) Patentinhaber: ASEA BROWN BOVERI AG, 5400 Baden (CH)
(72) Erfinder: Frutschi, Hans Ulrich, CH-5223 Riniken (CH); Wettstein, Hans, Dr., CH-5442 Fislisbach (CH)

(56) Entgegenhaltungen:
- EP-A- 0 387 532
- EP-A- 0 462 458
- DE-A- 2 649 938
- GB-A- 1 093 793
- GB-A- 2 236 145
- US-A- 1 574 829
- US-A- 2 635 425
- US-A- 4 835 962
- US-A- 5 097 666

## Beschreibung

### Technisches Gebiet

Die vorliegende Erfindung betrifft eine Kraftwerksanlage gemäss Oberbegriff des Anspruchs 1.

### Stand der Technik

Bei Verbesserungen von Kraftwerksanlagen geht es letzlich immer darum, die Schadstoff-Emissionen aus der Verbrennung zu minimieren und den Wirkungsgrad der Anlage zu maximieren. In diesem Zusammenhang wird auf die Gasturbogruppen der neueren Generation hingewiesen, welche Wirkungsgrade von über 35% zu erbringen vermögen. Eine weitere ausgereifte Technik bei Kraftwerksanlagen bilden die sogenannten Kombianlagen. Unter diesem Begriff wird das betriebliche Zusammenwirken einer Gasturbogruppe mit mindestens einem nachgeschalteten Dampfturbinenkreislauf verstanden, wobei die Abgase aus dem Gasturboprozess, welche noch über ein grösseres energetisches Potential verfügen, in einen Abhitzedampferzeuger geleitet werden, in welchem die Erzeugung des für die Beaufschlagung einer Dampfturbine notwendigen Dampfes erfolgt. Dabei kann es sich bei einem solchen Abhitzedampferzeuger um einen Einoder Mehrdruck-Apparat handeln. Des weiteren ist es möglich, den Abhitzedampferzeuger mit einer Zusatzfeuerung auszurüsten. Eine solche Anlage vermag nach heutigem Stand der Technik Wirkungsgrade von weit über 55% zu erbringen. Es ist offensichtlich, dass die Bestrebung dahin gehen, diese fossil befeuerten Kraftwerksanlagen weiter zu entwickeln, erstens im Hinblick auf eine bessere Ausnutzung der fossilen Reserven, und zweitens darauf, dass von der vorgegebenen Plattform aus jeder technologische Fortschritt, im Sinne einer Hebelwirkung, wirtschaftlich überpropotional zu Buche schlägt. Bei Gasturbogruppen muss ein nicht irrelevanter Anteil der Turbinenleistung zum Antrieb des Verdichters aufgewendet werden, so dass eine Erhöhung des Druckgefälles in der Gasturbine, die an sich zu einer höheren Wirkungsgradsausbeute der Anlage führt, über eine höhere Verdichtung der Arbeitsluft im Verdichter zu erreichen ist, mithin bilanzmässig weniger oder nichts bringt, denn die Plusleistung aus der Turbine geht in Form einer erhöhten Aufnahme der Wellenleistung durch den Verdichter verloren.

Aus EP-A1-0 462 458 ist ein Verfahren zur Erhöhung des verdichterbedingten Druckgefälles der Gasturbine einer Krafterzeungsmaschine bekanntgeworden. Bei diesem Verfahren besteht die Schaltung aus einer Gasturbogruppe und einem nachgeschalteten Abhitzedampferzeuger. Unmittelbar stromauf der Brennkammer wirkt ein Injektor, durch dessen Fangdüse die im Kompressor vorverdichtete Luft strömt. Die Treibdüse dieses Injektors wird durch mindestens einen Teil des im Abhitzedampferzeuger anfallenden Dampfes beaufschlagt, wodurch die Verdichterluft weiterverdichtet wird, dies ohne Inanspruchnahme eines Leistungsanteils aus der Gasturbine. Diese Ausrichtung bringt die angepeilte Steigerung des Wirkungsgrades mit sich, voausgesetzt, dass die Verbrennung in der Brennkammer mit einem gasförmigen Brennstoff erfolgt. Wird demgegenüber mit einem flüssigen Brennstoff operiert, so sind betreffend Vergasung dieses Brennstoffes zusätzliche Hilfsmassnahmen vonnöten, welche die resultierende Wirkungsgradssteigerung aus der Weiterverdichtung der Luft über einen Injektor weitgehend wieder zunichte machen. Eine simple Eindüsung eines flüssigen Brennstoffes durch Zerstäubung bringt nicht die tiefen NOx-Werte, wie sie heute angestrebt werden. Hier hilft auch eine Beimischung von Dampf nicht im erwünschten Mass.

Eine solche Kraftwerksanlage, bestehend aus einem Verdichter, einer Brennkammer, einer Gasturbine und einem der Gasturbine nachgeschalteten Abhitzdampferzeuger, in welcher der Brennkammer direkt oder stromabwärts Dampf beigemischt wird, ist beispielsweise auch aus der Schrift GB 2 236 145 A bekannt.

### Darstellung der Erfindung

Hier will die Erfindung Abhilfe schaffen. Der Erfindung, wie sie in den Ansprüchen gekennzeichnet ist, liegt die Aufgabe zugrunde, bei einer Kraftwerksanlage der eingangs genannten Art die Aufbereitung des flüssigen Brennstoffes für die Belange einer NOx-armen Verbrennung ohne Wirkungsgradseinbusse zu bewerkstelligen.

Die wesentlichen Vorteile der Erfindung sind darin zu sehen, dass nach demselben Prinzip, wie es zur Weiterverdichtung der Luft zur Anwendung gelangt, auch für die Aufbereitung des flüssigen Brennstoffes verfahren wird. Demnach ist die Gasturbo- gruppe mit einem zweiten Injektor versehen, durch dessen Fangdüse der flüssige Brennstoff zum Betreiben eines Brenners strömt. Die Treibdüse dieses Injektors wird ebenfalls mit einem Teil des im Abhitzedampferzeuger anfallenden Dampfes beaufschlagt. Durch diese Vorgehensweise wird auf den flüssigen Brennstoff in zweifacher Hinsicht eingewirkt: Zum einen bewirken die Scherkräfte und die interne Verwirbelung im Injektor, dass der flüssige Brennstoff zu kleinsten Tröpfchen atomisiert wird; zum anderen sorgt die Temperatur des Dampfes dafür, dass diese kleinsten Brennstoff-Tröpfchen raschestens verdampft werden, dergestalt, dass der dem Injektor nachgeschaltete Brenner mit einem optimalen Gemisch aus Brennstoff und Dampf gespiesen wird, wobei das Gemisch einem mageren Brenngas entspricht. Bei dieser Konstellation lässt sich als Brenner vorzugsweise ein Vormischbrenner vorsehen, dessen Verbrennungsluft die bereits gewürdigte Weiterverdichtung über den anderen Injektor durchfahren hat. Die Parallelschaltung der beiden durch Dampf beaufschlagten Injektoren machen es möglich, dass einerseits die Steigerung des Wirkungsgrades unberührt bleibt, andererseits die Brennkammer mit einem Vormischbrenner und mit flüssigem Brennstoff betrieben werden kann, wobei die Schadstoff-Emissionen, insbesondere die NOx-Emissionen, minimiert anfallen.

Ist die Brennkammer der Gasturbogruppe als Ringbrennkammer ausgelegt, so ergibt sich eine vorteilhafte Anordnung betreffend Weiterverdichtung der Luft im Injektor. Diese Injektion besteht darin, im Bereich des Austrittsdiffusors des Verdichters einen geschlossenen Kranz von Injektoren vorzusehen, welche über eine ausserhalb des Gehäuses der Ringbrennkammer angelegte Ringleitung gespiesen werden.

Vorteilhafte und zweckmässige Weiterbildungen der erfindungsgemässen Aufgabenlösung sind in den weiteren Ansprüchen gekennzeichnet.

Im folgenden wird anhand der Zeichnungen Ausführungsbeispiele der Erfindung dargestellt und näher erläutert. Alle für das unmittelbare Verständnis der Erfindung nicht erforderlichen Elemente sind fortgelassen. Die Strömungsrichtung der verschiedenen Medien ist mit Pfeilen angegeben. Gleiche Elemente sind in den verschiedenen Figuren mit den gleichen Bezugszeichen versehen.

### Kurze Beschreibung der Zeichnungen

Es zeigt:
- Fig. 1: eine Schaltung in schematischer Darstellung einer Gasturbogruppe mit einem Abhitzedampferzeuger und Injektor,
- Fig. 2: eine Ausführungsform der Gasturbine mit einer Ringbrennkammer, mit Verdichter und Turbine auf einer Welle angeordnet, und mit verschiedenen Injektoren,
- Fig. 3: einen Brenner in der Ausführung als "Doppelkegelbrenner" in perspektivischer Darstellung, entsprechend aufgeschnitten und
- Fig. 4-6: entsprechende Schnitte durch verschiedene Ebenen des Brenners.

### Wege zur Ausführung der Erfindung, gewerbliche Verwertbarkeit

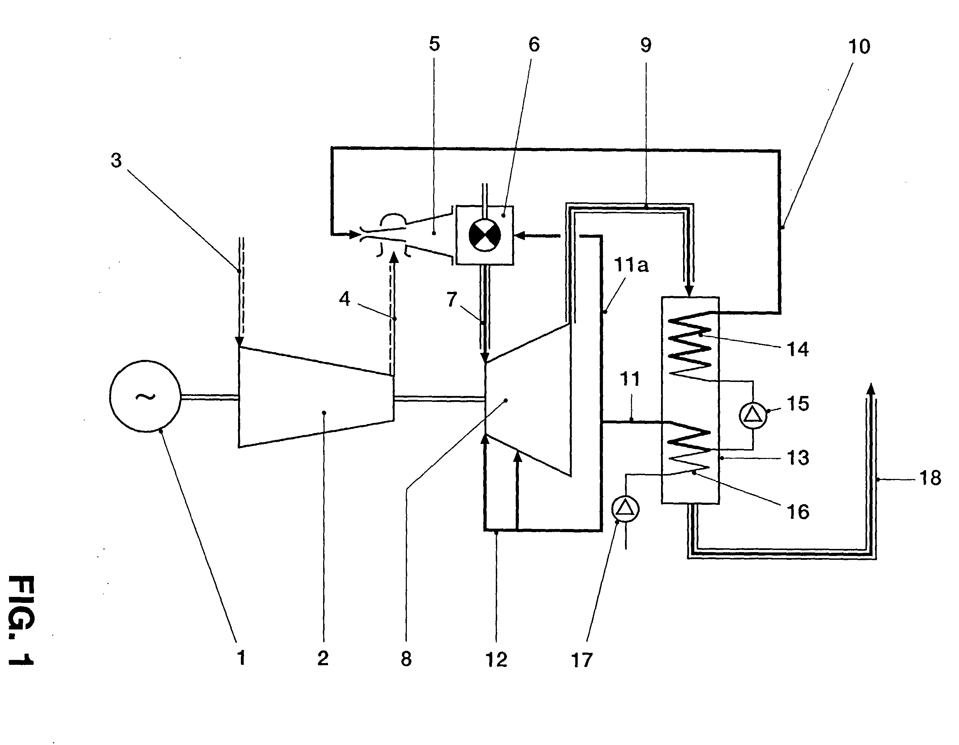

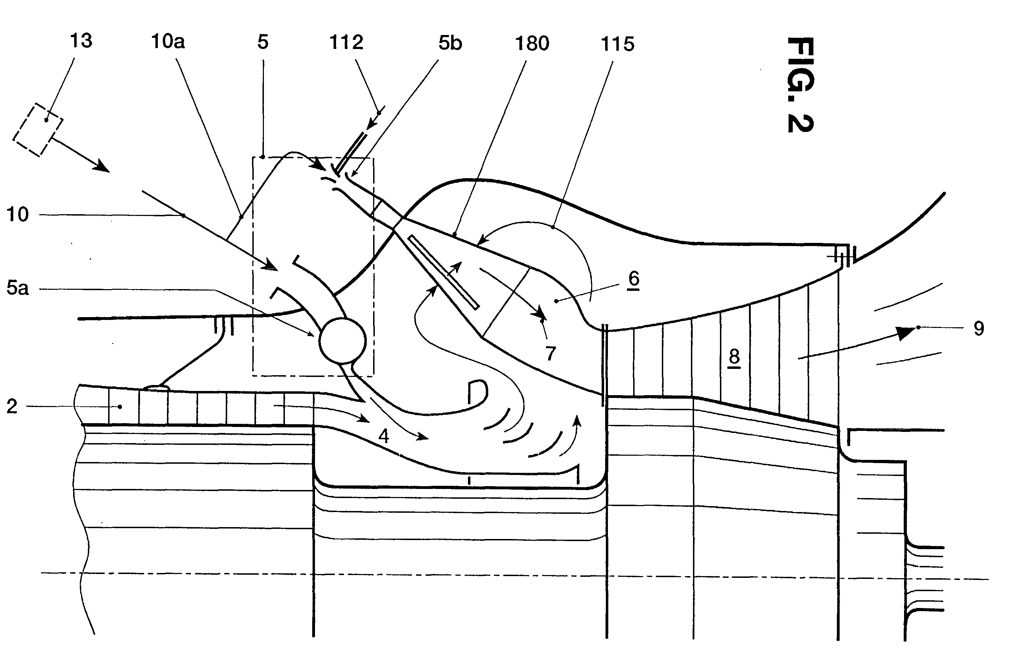

Fig. 1 zeigt eine Gasturbogruppe, in welche ein Abhitzedampferzeuger 13 sowie ein Injektorsystem 5 integriert sind. Die beiden letztgenannten Aggregate stehen in Wirkverbindung mit der Gasturbogruppe. Die Gasturbogruppe als autonome Einheit besteht komponentenmässig aus einem Generator 1, einem Verdichter 2, einer Brennkammer 6 und einer Turbine 8. Die angesaugte Luft 3 wird im Verdichter 2 im Sinne einer Vorverdichtung komprimiert und gelangt sodann bereits im Austrittsdiffusor 4 des Verdichters 2 in den Wirkbereich des Injektorsystems 5. Das Injektorsystem 5, die spezifische Ausbildung der Brennkammer 6 sowie deren Brenner werden unter Fig. 2-6 näher erläutert. Die in der genannten Brennkammer 6 thermisch aufbereitete Verbrennungsluft beaufschlagt als Heissgas 7 die nachgeschaltete Turbine 8. Die Gasturbinenabgase 9 werden dem Abhitzedampferzeuger 13 zugeführt, wo sie energetisch weiter genutzt werden. Aus der freigesetzten thermischen Energie aus diesen Abgasen 9 wird in einem Hochdruck-Dampferzeugungsteil 14 ein Hochdruckdampf 10 erzeugt, der dem Injektorsystem 5 zugeführt wird, und dort jeweils die entsprechende Treibdüse beaufschlagt. Da es sich hier um einen Zweidruck-Abhitzedampferzeuger 13 handelt, wird in einem weiteren Niederdruck-Dampferzeugungsteil 16 ein Niederdruckdampf 11 bereitgestellt. Ein Teil dieses Dampfes 11a wird besipielsweise der Brennkammer 6 zugeführt, und kann dort zur weiteren Minimierung der NOx-Emissionen eingesetzt werden. Ein anderer Teil des aus dem Niederdruck-Dampferzeungungsteil 16 abfallenden Dampfes 12 kann als Kühlmittel für die Turbine 8 Anwendung finden. Die abgekühlten Abgase werden dann als Rauchgase 18 über einen Kamin ins Freie abgeblasen. Eine erste Speisewasserpumpe 17 sorgt für den Nachschub des Mediums in den Abhitzedampferzeuger 13, während eine zweite Speisewasserpumpe 15 die Förderung des Mediums zwischen Niederdruck- und Hochdruck-Dampferzeugungsteil besorgt. Ueber die Wirkung einer solchen Schaltung, was die Verwendung des Hochdruckdampfes 10 anbelangt, wird auf Fig. 2 verwiesen. Noch folgende Erläuterungen sind hier am Platze: Weil zur Beaufschlagung des Injektorssystems 5 ein Dampf hohen Druckes zur Anwendung gelangt, können im entsprechenden Dampferzeugungsteil 14 die Abgase 9 aus der Turbine 8 nicht hinreichend genutzt werden. Daher wird vorteilhaft dieser ersten Stufe der bereits oben erwähnte Niederdruck-Dampferzeugungsteil 16 nachgeschaltet, dessen Dampf 11, wie ebenfalls oben kurz erwähnt, der Turbine 8 als Kühlmittel 12 und/oder gegen einen zu hohen NOx-Ausstoss als Moderatormedium 11a der Verbrennung in der Brennkammer 6 zugeführt wird. Natürlich trägt auch dieser Niederdruckdampf 11 zur Erhöhung von Leistung und Wirkungsgrad bei. Selbstverständlich kann diese Schaltung nach Fig. 1 als Kombianlage ausgelegt werden, indem ein Dampfteil aus dem Abhitzedampferzeuger 13 eine nachgeschaltete, nicht ersichtliche Dampfturbine beaufschlagt. Eine solche Anordnung kann in Verbindung mit einer Zusatzfeuerung in der Abgasleitung 9, spätestens im Abhitzedampferzeuger 13 selbst, von Vorteil sein. Schliesslich kann der Abhitzedampferzeuger mit weiteren Druckstufen ausgerüstet und die Anlage so optimiert werden. Dampf noch tieferen Druckes könnte beispielsweise dem Niederdruckteil der oben erwähnten Dampfturbine zugeführt, als Kühlmittel für die letzten Stufen der Gasturbine, oder zu Heizzwecken verwendet werden.

Der für das Injektorsystem 5 anwendbare Dampf muss nicht notwendigerweise aus einem Abhitzedampferzeuger stammen. Sobald Dampf in genügender Qualität und Quantität vorhanden ist, lässt er sich zum Betreiben des Injektorsystems verwenden.

Fig. 2 zeigt die Wirkungsweise von Injektoren 5a und 5b im Bereich der als Ringbrennkammer ausgebildeten Brennkammer 6. Sowohl Verdichter 2 als auch Turbine 8 sind auf einer gemeinsamen Welle gelagert. Unmittelbar stromab des Verdichters 2, in dessen Austrittsdiffusor 4, wird die vorverdichtete Luft über die Wirkung des Injektors 5a weiterverdichtet. Der im Abhitzedampferzeuger 13 erzeugte Hochdruckdampf 10 beaufschlagt die Treibdüse dieses Injektors 5a und bewirkt, dass die vorverdichtete Luft aus dem Verdichter 2 weiterverdichtet wird, wobei hier der Austrittsdiffusor 4 als Fangdüse des Injektors 5a wirkt. Dadurch wird die Verbrennung auf einer höheren Druckstufe durchgeführt; die Turbine 8 wird mit einem Druckgefälle beaufschlagt, das mittels des Verdichters 2 allein nicht aufgebaut werden könnte. So wird die dem im Abhitzedampferzeuger erzeugten Dampf innenwohnende Exergie besser genutzt, womit sowohl die Leistung als auch der Wirkungsgrad eine Erhöhung gegenüber der bekannten Anlage mit simpler Dampfeinblasung erfahren. Aus betrieblicher Sicht ergibt sich durch die Wirkung des Injektors 5a der Vorteil, dass mit zunehmendem Dampfstrom 10 der Druck vor der Turbine 8 ansteigt, ohne dass der Gegendruck des Verdichters 2 unzulässig wachsen würde. So wird immer eine genügend grosse Pumpmarge des Verdichters 2 gewahrt. Im hier dargestellten Fall, wonach die Brennkammer eine Ringbrennkammer 6 ist, wird ein geschlossener Kranz von Injektoren im Bereich des Austrittsdiffusors 4 installiert. Von der Dampfzuführung 10 zum Injektor 5a wird ein Teil 10a abgezweigt, und der Treibdüse eines anderen Injektors 5b zugeführt. Dieser Injektor 5b ist stromauf eines Brenners 100 angeordnet. In die Fangdüse dieses Injektors 5b strömt ein flüssiger Brennstoff 112 ein. Durch diese Vorgehensweise wird auf den flüssigen Brennstoff 112 in zweifacher Hinsicht eingewirkt: Zum einen bewirken die Scherkräfte und die interne Verwirbelung im Injektor 5b, dass der flüssige Brennstoff 112 zu kleinsten Tröpfchen atomisiert wird; zum anderen sorgt die Temperatur des eingesetzten Dampfes 10a dafür, dass diese kleinsten Tröpfchen raschestens zur Verdampfung kommen, dergestalt, dass im nachgeschalteten Brenner 100 ein optimales Gemisch aus Brennstoff und Dampf eingedüst wird, bevor es sich weiter mit der Verbrennungsluft 115 vermischt. Auch hier ist es vorteilhaft, wenn die dafür erforderlichen Injektoren 5b einen geschlossenen Kranz bilden.

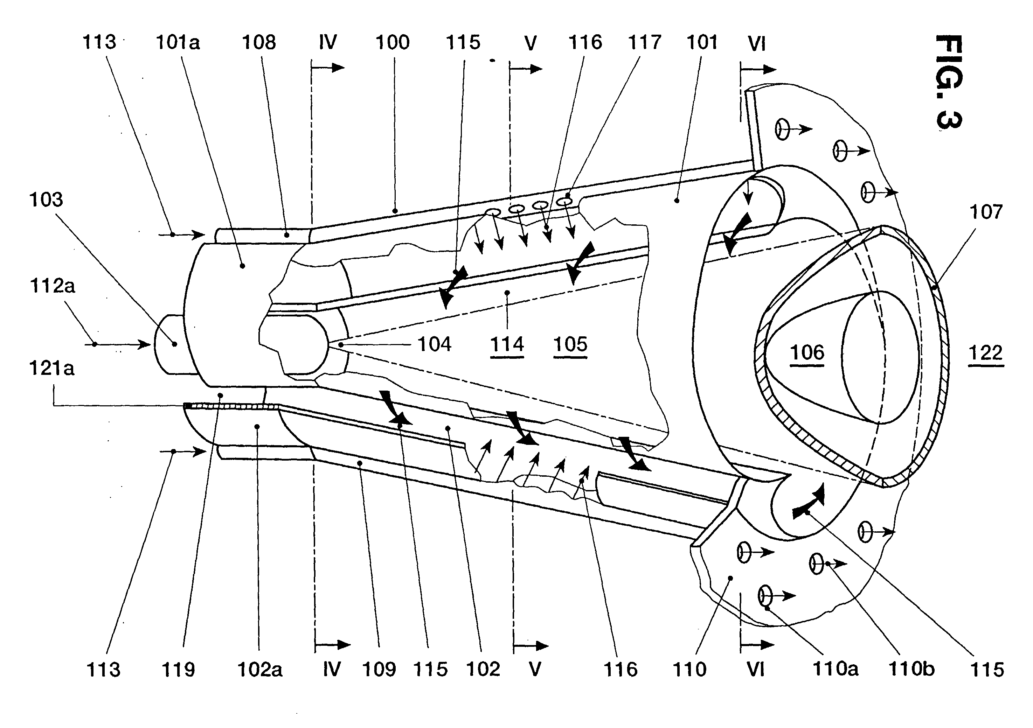

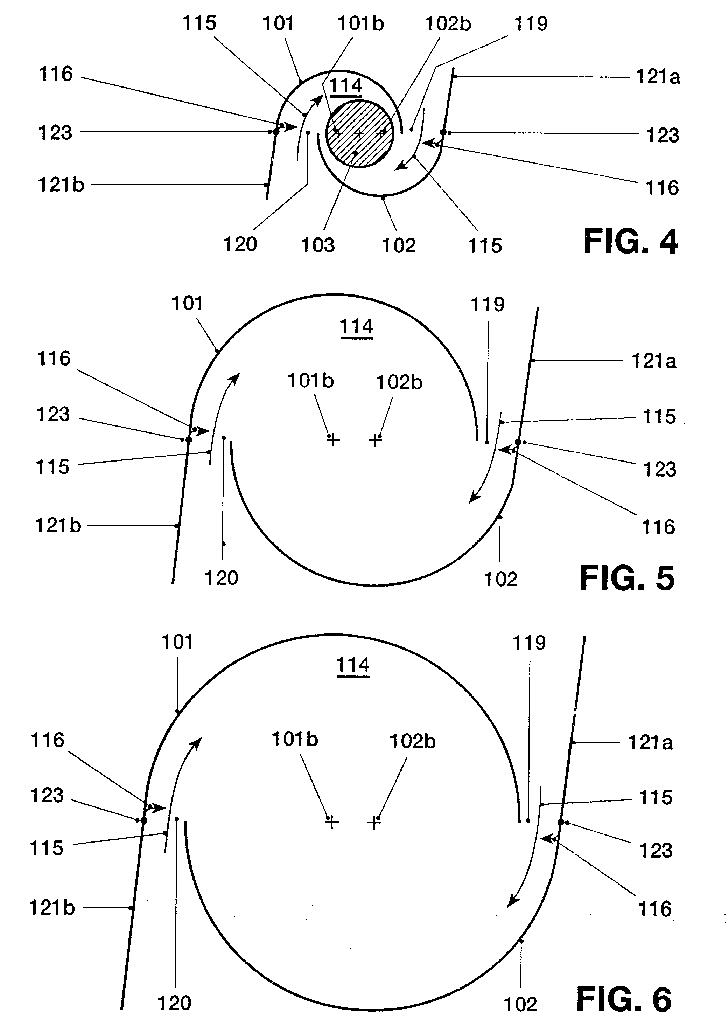

Um den Aufbau des Brenners 100 besser zu verstehen, ist es von Vorteil, wenn gleichzeitig zu Fig. 3 die einzelnen Schnitte nach den Figuren 4-6 herangezogen werden. Des weiteren, um Fig. 3 nicht unnötig unübersichtlich zu gestalten, sind in ihr die nach den Figuren 4-6 schematisch gezeigten Leitbleche 121a, 121b nur andeutungsweise aufgenommen worden. Im folgenden wird bei der Beschreibung von Fig. 3 nach Bedarf auf die restlichen Figuren 4-6 hingewiesen.

Der Brenner nach Fig. 3 ist ein Vormischbrenner und besteht aus zwei hohlen kegelförmigen Teilkörpern 101, 102, die versetzt zueinander ineinandergeschachtelt sind. Die Versetzung der jeweiligen Mittelachse oder Längssymmetrieachsen 201b, 202b der kegeligen Teilkörper 101, 102 zueinander schafft auf beiden Seiten, in spiegelbildlicher Anordnung, jeweils einen tangentialen Lufteintrittsschlitz 119, 120 frei (Fig. 4-6), durch welche die Verbrennungsluft 115 in Innenraum des Brenners 100, d.h. in den Kegelhohlraum 114 strömt. Die Kegelform der gezeigten Teilkörper 101, 102 in Strömungsrichtung weist einen bestimmten festen Winkel auf. Selbstverständlich, je nach Betriebseinsatz, können die Teilkörper 101, 102 in Strömungsrichtung eine zunehmende oder abnehmende Kegelneigung aufweisen, ähnlich einer Tronpete resp. Tulpe. Die beiden letztgenannten Formen sind zeichnerisch nicht erfasst, da sie für den Fachmann ohne weiteres nachempfindbar sind. Die beiden kegeligen Teilkörper 101, 102 weisen je einen zylindrischen Anfangsteil 101a, 102a, die ebenfalls, analog den kegeligen Teilkörpern 101, 102, versetzt zueinander verlaufen, so dass die tangentialen Lufteintrittsschlitze 119, 120 über die ganze Länge des Brenners 100 vorhanden sind. Im Bereich des zylindrischen Anfangsteils ist eine Düse 103 untergebracht, deren Eindüsung 104 in etwa mit dem engsten Querschnitt des durch die kegeligen Teilkörper 101, 102 gebildeten Kegelhohlraum 114 zusammenfällt. Die Eindüsungskapazität und die Art dieser Düse 103 richtet sich nach den vorgegebenen Parametern des jeweiligen Brenners 100. Selbstverständlich kann der Brenner rein kegelig, also ohne zylindrische Anfangsteile 101a, 102a, ausgeführt sein. Die kegeligen Teilkörper 101, 102 weisen des weiteren je eine Brennstoffleitung 108, 109 auf, welche entlang der tangentialen Eintrittsschlitze 119, 120 angeordnet und mit Eindüsungsöffnungen 117 versehen sind, durch welche vorzugsweise ein gasförmiger Brennstoff 113 in die dort durchströmende Verbrennungsluft 115 eingedüst wird, wie dies die Pfeile 116 versinnbildlichen wollen. Diese Brennstoffleitungen 108, 109 sind vorzugsweise spätestens am Ende der tangentialen Einströmung, vor Eintritt in den Kegelhohlraum 114, plaziert, dies um eine optimale Luft/Brennstoff-Mischung zu erhalten. Brennraumseitig 122 geht die Ausgangsöffnung des Brenners 100 in eine Frontwand 110 über, in welcher eine Anzahl Bohrungen 110a vorhanden sind. Die letztgenannten treten bei Bedarf in Funktion, und sorgen dafür, dass Verdünnungsluft oder Kühlluft 110b dem vorderen Teil des Brennraumes 122 zugeführt wird. Darüber hinaus sorgt diese Luftzuführung für eine Flammenstabilisierung am Ausgang des Brenners 100. Diese Flammenstabilisierung wird dann wichtig, wenn es darum geht, die Kompaktheit der Flamme infolge einer radialen Verflachung zu stützen. Bei dem durch die Düse 103 herangeführten Brennstoff handelt es sich um ein Gemisch 112a aus einem flüssigen Brennstoff 112 und Dampf 10 (Vgl. Fig. 2). Dieses Brennstoff/Dampf-Gemisch 112a wird unter einem spitzen Winkel in den Kegelhohlraum 114 eingedüst. Aus der Düse 103 bildet sich sonach ein kegeliges Brennstoffprofil 105, dass von der tangential einströmenden rotierenden Verbrennungsluft 115 umschlossen wird. In axialer Richtung wird die Konzentration des Brennstoff/Dampf-Gemisches 112a fortlaufend durch die einströmenden Verbrennungsluft 115 zu einer optimalen Vermischung abgebaut. Wird ein gasförmiger Brennstoff 113 über die Oeffnungsdüsen 117 eingebracht, geschieht die Bildung des Brennstoff/Luft-Gemisches direkt am Ende der Lufteintrittsschlitze 119, 120. Bei der Eindüsung des Brennstoff/Dampf-Gemisches 112a wird im Bereich des Wirbelaufplatzens, also im Bereich der Rückströmzone 106, die optimale, homogene Brennstoffkonzentration über den Querschnitt erreicht. Die Zündung erfolgt an der Spitze der Rückströmzone 106. Erst an dieser Stelle kann eine stabile Flammenfront 107 entstehen. Ein Rückschlag der Flamme ins Innere des Brenners 100, wie dies bei bekannten Vormischstrecken latent der Fall ist, wogegen dort mit komplizierten Flammenhaltern Abhilfe gesucht wird, ist hier nicht zu befürchten. Ist die Verbrennungsluft 115 zusätzlich vorgeheizt oder mit einem rückgeführten Abgas angereichert, so unterstützt dies die Verdampfung des flüssigen Brennstoffes 112 nachhaltig, bevor die Verbrennungszone erreicht wird. Die gleichen Ueberlegungen gelten auch, wenn über die Leitungen 108, 109 flüssige Brennstoffe zugeführt werden. Bei der Gestaltung der kegeligen Teilkörper 101, 102 hinsichtlich Kegelwinkel und Breite der tangentialen Lufteintrittsschlitze 119, 120 sind enge Grenzen einzuhalten, damit sich das gewünschte Strömungsfeld der Verbrennungsluft 115 mit der Strömungszone 106 am Ausgang des Brenners einstellen kann. Allgemein ist zu sagen, dass eine Verkleinerung der tangentialen Lufteintrittsschlitze 119, 120 die Rückströmzone 106 weiter stromaufwärts verschiebt, wodurch dann allerdings das Gemisch früher zur Zündung kommt. Immerhin ist festzustellen, dass die einmal fixierte Rückströmzone 106 an sich positionsstabil ist, denn die Drallzahl nimmt in Strömungsrichtung im Bereich der Kegelform des Brenners 100 zu. Die Axialgeschwindigkeit innerhalb des Brenners 100 lässt sich durch eine entsprechende nicht gezeigte Zuführung eines axialen Verbrennungsluftstromes verändern. Die Konstruktion des Brenners 100 eignet sich des weiteren vorzüglich, die Grösse der tangentialen Lufteintrittsschlitze 119, 120 zu verändern, womit ohne Veränderung der Baulänge des Brenners 100 eine relativ grosse betriebliche Bandbreite erfasst werden kann.

Aus Fig. 4-6 geht nunmehr die geometrische Konfiguration der Leitbleche 121a, 121b hervor. Sie haben Strömungseinleitungsfunktion, wobei diese, entsprechend ihrer Länge, das jeweilige Ende der kegeligen Teilkörper 101, 102 in Anströmungsrichtung gegenüber der Verbrennungsluft 115 verlängern. Die Kanalisierung der Verbrennungsluft 115 in den Kegelhohlraum 114 kann durch Oeffnen bzw. Schliessen der Leitbleche 121a, 121b um einen im Bereich des Eintritts dieses Kanals in den Kegelhohlraum 114 plazierten Drehpunkt 123 optimiert werden, insbesondere ist dies vonnöten, wenn die ursprüngliche Spaltgrösse der tangentialen Lufteintrittsschlitze 119, 120 verändert wird. Selbstverständlich können diese dynamische Vorkehrungen auch statisch vorgesehen werden, indem bedarfsmässige Leitbleche einen festen Bestandteil mit den kegeligen Teilkörpern 101, 102 bilden. Ebenfalls kann der Brenner 100 auch ohne Leitbleche betrieben werden, oder es können andere Hilfsmittel hierfür vogesehen werden

Um den Aufbau des Brenners 100 besser zu verstehen, ist es von Vorteil, wenn gleichzeitig zu Fig. 3 die einzelnen Schnitte nach den Figuren 4-6 herangezogen werden. Des weiteren, um Fig. 3 nicht unnötig unübersichtlich zu gestalten, sind in ihr die nach den Figuren 4-6 schematisch gezeigten Leitbleche 121a, 121b nur andeutungsweise aufgenommen worden. Im folgenden wird bei der Beschreibung von Fig. 3 nach Bedarf auf die restlichen Figuren 4-6 hingewiesen.

Der Brenner nach Fig. 3 ist ein Vormischbrenner und besteht aus zwei hohlen kegelförmigen Teilkörpern 101, 102, die versetzt zueinander ineinandergeschachtelt sind. Die Versetzung der jeweiligen Mittelachse oder Längssymmetrieachsen 201b, 202b der kegeligen Teilkörper 101, 102 zueinander schafft auf beiden Seiten, in spiegelbildlicher Anordnung, jeweils einen tangentialen Lufteintrittsschlitz 119, 120 frei (Fig. 4-6), durch welche die Verbrennungsluft 115 in Innenraum des Brenners 100, d.h. in den Kegelhohlraum 114 strömt. Die Kegelform der gezeigten Teilkörper 101, 102 in Strömungsrichtung weist einen bestimmten festen Winkel auf. Selbstverständlich, je nach Betriebseinsatz, können die Teilkörper 101, 102 in Strömungsrichtung eine zunehmende oder abnehmende Kegelneigung aufweisen, ähnlich einer Trompete resp. Tulpe. Die beiden letztgenannten Formen sind zeichnerisch nicht erfasst, da sie für den Fachmann ohne weiteres nachempfindbar sind. Die beiden kegeligen Teilkörper 101, 102 weisen je einen zylindrischen Anfangsteil 101a, 102a, die ebenfalls, analog den kegeligen Teilkörpern 101, 102, versetzt zueinander verlaufen, so dass die tangentialen Lufteintrittsschlitze 119, 120 über die ganze Länge des Brenners 100 vorhanden sind. Im Bereich des zylindrischen Anfangsteils ist eine Düse 103 untergebracht, deren Eindüsung 104 in etwa mit dem engsten Querschnitt des durch die kegeligen Teilkörper 101, 102 gebildeten Kegelhohlraum 114 zusammenfällt. Die Eindüsungskapazität und die Art dieser Düse 103 richtet sich nach den vorgegebenen Parametern des jeweiligen Brenners 100. Selbstverständlich kann der Brenner rein kegelig, also ohne zylindrische Anfangsteile 101a, 102a, ausgeführt sein. Die kegeligen Teilkörper 101, 102 weisen des weiteren je eine Brennstoffleitung 108, 109 auf, welche entlang der tangentialen Eintrittsschlitze 119, 120 angeordnet und mit Eindüsungsöffnungen 117 versehen sind, durch welche vorzugsweise ein gasförmiger Brennstoff 113 in die dort durchströmende Verbrennungsluft 115 eingedüst wird, wie dies die Pfeile 116 versinnbildlichen wollen. Diese Brennstoffleitungen 108, 109 sind vorzugsweise spätestens am Ende der tangentialen Einströmung, vor Eintritt in den Kegelhohlraum 114, plaziert, dies um eine optimale Luft/Brennstoff-Mischung zu erhalten. Brennraumseitig 122 geht die Ausgangsöffnung des Brenners 100 in eine Frontwand 110 über, in welcher eine Anzahl Bohrungen 110a vorhanden sind. Die letztgenannten treten bei Bedarf in Funktion, und sorgen dafür, dass Verdünnungsluft oder Kühlluft 110b dem vorderen Teil des Brennraumes 122 zugeführt wird. Darüber hinaus sorgt diese Luftzuführung für eine Flammenstabilisierung am Ausgang des Brenners 100. Diese Flammenstabilisierung wird dann wichtig, wenn es darum geht, die Kompaktheit der Flamme infolge einer radialen Verflachung zu stützen. Bei dem durch die Düse 103 herangeführten Brennstoff handelt es sich um ein Gemisch 112a aus einem flüssigen Brennstoff 112 und Dampf 10 (Vgl. Fig. 2). Dieses Brennstoff/Dampf-Gemisch 112a wird unter einem spitzen Winkel in den Kegelhohlraum 114 eingedüst. Aus der Düse 103 bildet sich sonach ein kegeliges Brennstoffprofil 105, dass von der tangential einströmenden rotierenden Verbrennungsluft 115 umschlossen wird. In axialer Richtung wird die Konzentration des Brennstoff/Dampf-Gemisches 112a fortlaufend durch die einströmenden Verbrennungsluft 115 zu einer optimalen Vermischung abgebaut. Wird ein gasförmiger Brennstoff 113 über die Oeffnungsdüsen 117 eingebracht, geschieht die Bildung des Brennstoff/Luft-Gemisches direkt am Ende der Lufteintrittsschlitze 119, 120. Bei der Eindüsung des Brennstoff/Dampf-Gemisches 112a wird im Bereich des Wirbelaufplatzens, also im Bereich der Rückströmzone 106, die optimale, homogene Brennstoffkonzentration über den Querschnitt erreicht. Die Zündung erfolgt an der Spitze der Rückströmzone 106. Erst an dieser Stelle kann eine stabile Flammenfront 107 entstehen. Ein Rückschlag der Flamme ins Innere des Brenners 100, wie dies bei bekannten Vormischstrecken latent der Fall ist, wogegen dort mit komplizierten Flammenhaltern Abhilfe gesucht wird, ist hier nicht zu befürchten. Ist die Verbrennungsluft 115 zusätzlich vorgeheizt oder mit einem rückgeführten Abgas angereichert, so unterstützt dies die Verdampfung des flüssigen Brennstoffes 112 nachhaltig, bevor die Verbrennungszone erreicht wird. Die gleichen Ueberlegungen gelten auch, wenn über die Leitungen 108, 109 flüssige Brennstoffe zugeführt werden. Bei der Gestaltung der kegeligen Teilkörper 101, 102 hinsichtlich Kegelwinkel und Breite der tangentialen Lufteintrittsschlitze 119, 120 sind enge Grenzen einzuhalten, damit sich das gewünschte Strömungsfeld der Verbrennungsluft 115 mit der Strömungszone 106 am Ausgang des Brenners einstellen kann. Allgemein ist zu sagen, dass eine Verkleinerung der tangentialen Lufteintrittsschlitze 119, 120 die Rückströmzone 106 weiter stromaufwärts verschiebt, wodurch dann allerdings das Gemisch früher zur Zündung kommt. Immerhin ist festzustellen, dass die einmal fixierte Rückströmzone 106 an sich positionsstabil ist, denn die Drallzahl nimmt in Strömungsrichtung im Bereich der Kegelform des Brenners 100 zu. Die Axialgeschwindigkeit innerhalb des Brenners 100 lässt sich durch eine entsprechende nicht gezeigte Zuführung eines axialen Verbrennungsluftstromes verändern. Die Konstruktion des Brenners 100 eignet sich des weiteren vorzüglich, die Grösse der tangentialen Lufteintrittsschlitze 119, 120 zu verändern, womit ohne Veränderung der Baulänge des Brenners 100 eine relativ grosse betriebliche Bandbreite erfasst werden kann.

Aus Fig. 4-6 geht nunmehr die geometrische Konfiguration der Leitbleche 121a, 121b hervor. Sie haben Strömungseinleitungsfunktion, wobei diese, entsprechend ihrer Länge, das jeweilige Ende der kegeligen Teilkörper 101, 102 in Anströmungsrichtung gegenüber der Verbrennungsluft 115 verlängern. Die Kanalisierung der Verbrennungsluft 115 in den Kegelhohlraum 114 kann durch Oeffnen bzw. Schliessen der Leitbleche 121a, 121b um einen im Bereich des Eintritts dieses Kanals in den Kegelhohlraum 114 plazierten Drehpunkt 123 optimiert werden, insbesondere ist dies vonnöten, wenn die ursprüngliche Spaltgrösse der tangentialen Lufteintrittsschlitze 119, 120 verändert wird. Selbstverständlich können diese dynamische Vorkehrungen auch statisch vorgesehen werden, indem bedarfsmässige Leitbleche einen festen Bestandteil mit den kegeligen Teilkörpern 101, 102 bilden. Ebenfalls kann der Brenner 100 auch ohne Leitbleche betrieben werden, oder es können andere Hilfsmittel hierfür vogesehen werden

### Bezugszeichenliste

- 1.: Generator
- 2.: Verdichter
- 3: Ansaugluft
- 4: Austrittsdiffusor
- 5: Injektorsystem
- 5a, 5b: Injektoren
- 6: Brennkammer
- 7: Heissgase
- 8: Turbine
- 9: Abgase
- 10, 10a: Hochdruckdampf
- 11, 11a, 12: Niederdruckdampf
- 13: Abhitzedampferzeuger
- 14, 16: Dampferzeugungsteile
- 15, 17: Speisewasserpumpen
- 18: Rauchgase
- 100: Brenner
- 101, 102: Teilkörper
- 101a, 102a: Zylindrische Angangsteile
- 101b, 102b: Längssymmetrieachsen
- 103: Brennstoffdüse
- 104: Brennstoffeindüsung
- 105: Brennstoffeindüsungsprofil
- 106: Rückströmzone (Vortex Breakdown)
- 107: Flammenfront
- 108, 109: Brennstoffleitungen
- 110: Frontwand
- 110a: Luftbohrungen
- 110b: Kühlluft
- 112: Flüssiger Brennstoff
- 112a: Brennstoff/Dampf-Gemisch
- 113: Gasförmiger Brennstoff
- 114: Kegelhohlraum
- 115: Verbrennungsluft
- 116: Brennstoff-Eindüsung
- 117: Brennstoffdüsen
- 119, 120: Tangentiale Lufteintrittsschlitze
- 121a, 121b: Leitbleche
- 122: Brennraum
- 123: Drehpunkt der Leitbleche

## Patentansprüche

1. Kraftwerksanlage, im wesentlichen bestehend aus mindestens einem Verdichter (2), mindestens einer mit mindestens einem Brenner (100) betreibbaren Brennkammer (6) und mindestens einer stromab der Brennkammer (6) wirkenden Turbine (8), wobei stromauf der Brennkammer (6) mindestens ein Injektorsystem (5) vorhanden sind, dessen Treibdüse durch Dampf aus einem Erzeuger (13) beaufschlagbar sind,
dadurch gekennzeichnet, dass
in die Fangdüse eines ersten derartigen Injektorsystems (5a), das im Austrittsdiffusor (4) des Verdichters (2) plaziert ist, verdichtete Luft aus dem Verdichter (2) strömt und dass die Fangdüse eines zweiten derartigen Injektorsystems (5b) stromauf des Brenners (100) mit einem flüssigen Brennstoff (112) betreibbar ist.

2. Kraftwerksanlage nach Anspruch 1,
dadurch gekennzeichnet, dass
der Erzeuger des Dampfes (10) ein der Turbine (8) nachgeschalteter Abhitzedampferzeuger (13) ist.

3. Kraftwerksanlage nach Anspruch 1,
dadurch gekennzeichnet, dass
die Brennkammer (6) eine Ringbrennkammer ist, welche mit einer Anzahl stirnseitig angeordneter Brenner (100) bestückt ist.

4. Kraftwerksanlage nach Anspruch 1,
dadurch gekennzeichnet, dass
der Brenner (100) aus mindestens zwei hohlen, kegelförmigen, in Strömungsrichtung ineinandergeschachtelten Teilkörpern (101, 102) besteht, deren jeweilige Längssymmetrieachsen (101b, 102b) gegeneinander versetzt verlaufen, dass die benachbarten Wandungen der Teilkörper (101, 102) in deren Längserstreckung tangentiale Kanäle (119, 120) für einen Verbrennungsluftstrom (115) bilden, dass im von den Teilkörpern (101, 102) gebildeten Kegelhohlraum (114) mindestens eine Brennstoffdüse (103) vorhanden ist.

5. Kraftwerksanlage nach Anspruch 4,
dadurch gekennzeichnet, dass
im Bereich der tangentialen Kanäle (119, 120) in deren Längserstreckung weitere Brennstoffdüsen (117) angeordnet sind.

6. Kraftwerksanalge nach Anspruch 4,
dadurch gekennzeichnet, dass
sich die Teilkörper (101, 102) in Strömungsrichtung unter einem festen Winkel kegelig erweitern.

7. Kraftwerksanalge nach Anspruch 4,
dadurch gekennzeichnet, dass
die Teilkörper (101, 102) in Strömungsrichtung eine zunehmende Kegelneigung aufweisen.

8. Kraftwerksanalge nach Anspruch 4,
dadurch gekennzeichnet, dass
die Teilkörper (101, 102) in Strömungsrichtung eine abnehmende Kegelneigung aufweisen.

## Claims

1. Power plant, essentially consisting of at least one compressor (2), at least one combustion chamber (6) operable by means of at least one burner (100), and at least one turbine (8) acting downstream of the combustion chamber (6), there being present upstream of the combustion chamber (6) at least one injector system (5), the driving nozzle of which can be loaded by steam from a generator (13), characterized in that compressed air from the compressor (2) flows into the catching nozzle of a first injector system (5a) of this type which is placed in the outlet diffusor (4) of the compressor (2), and in that the catching nozzle of a second injector system (5b) of this type can be operated upstream of the burner (100) with a liquid fuel (112).

2. Power plant according to Claim 1, characterized in that the steam generator (10) is a waste-heat steam generator (13) downstream of the turbine (8).

3. Power plant according to Claim 1, characterized in that the combustion chamber (6) is an annular combustion chamber which is equipped with a number of burners (100) arranged on the end face.

4. Power plant according to Claim 1, characterized in that the burner (100) consists of at least two hollow conical part bodies (101, 102) which are nested one in the other in the direction of flow and the respective longitudinal axes of symmetry (101b, 102b) of which extend at an offset relative to one another, in that the adjacent walls of the part bodies (101, 102) form in their longitudinal extension tangential channels (119, 120) for a combustion-air stream (115), and in that at least one fuel nozzle (103) is present in the conical cavity (114) formed by the part bodies (101, 102).

5. Power plant according to Claim 4, characterized in that further fuel nozzles (117) are arranged in the region of the tangential channels (119, 120) in their longitudinal extension.

6. Power plant according to Claim 4, characterized in that the part bodies (101, 102) widen conically at a fixed angle in the direction of flow.

7. Power plant according to Claim 4, characterized in that the part bodies (101, 102) have an increasing amount of taper in the direction of flow.

8. Power plant according to Claim 4, characterized in that the part bodies (101, 102) have a decreasing amount of taper in the direction of flow.

## Revendications

1. Centrale à turbine à gaz, se composant essentiellement d'au moins un compresseur (2), d'au moins une chambre de combustion (6) pouvant être opérée par au moins un brûleur (100) et d'au moins une turbine (8) agissant en aval de la chambre de combustion (6), en amont de la chambre de combustion (6) au moins un système d'injecteur (5) étant prévu, dont les tuyères d'entraînement peuvent être sollicitées par de la vapeur provenant d'un générateur (13),
caractérisée en ce que
de l'air comprimé provenant du compresseur (2) s'écoule dans la tuyère collectrice d'un premier système d'injecteur de ce type (5a), qui est placé dans le diffuseur de sortie (4) du compresseur (2), et en ce que la tuyère collectrice d'un deuxième système d'injecteur de ce type (5b) est opérable en amont du brûleur (100) avec un combustible liquide (112).

2. Centrale à turbine à gaz selon la revendication 1, caractérisée en ce que le générateur de vapeur (10) est un générateur de vapeur à chaleur perdue (13) placé après la turbine (8).

3. Centrale à turbine à gaz selon la revendication 1, caractérisée en ce que la chambre de combustion (6) est une chambre de combustion annulaire, qui est équipée d'une pluralité de brûleurs (100) disposés du côté frontal.

4. Centrale à turbine à gaz selon la revendication 1, caractérisée en ce que le brûleur (100) se compose d'au moins deux corps partiels creux, en forme de cône (101, 102), imbriqués l'un dans l'autre dans la direction de l'écoulement, dont les axes de symétrie longitudinaux respectifs (101b, 102b) sont décalés l'un par rapport à l'autre, en ce que les parois voisines des corps partiels (101, 102) forment dans leur prolongement longitudinale des canaux tangentiels (119, 120) pour un courant d'air de combustion (115), en ce que dans l'espace creux conique (114) formé par les corps partiels (101, 102) est prévu au moins une tuyère de combustible (103).

5. Centrale à turbine à gaz selon la revendication 4, caractérisée en ce que dans la région des canaux tangentiels (119, 120) sont disposées d'autres tuyères de combustible (117) dans leur prolongement longitudinal.

6. Centrale à turbine à gaz selon la revendication 4, caractérisée en ce que les corps partiels (101, 102) s'élargissent en cône dans la direction de l'écoulement suivant un angle fixe.

7. Centrale à turbine à gaz selon la revendication 4, caractérisée en ce que les corps partiels (101, 102) présentent dans la direction de l'écoulement une conicité croissante.

8. Centrale à turbine à gaz selon la revendication 4, caractérisée en ce que les corps partiels (101, 102) présentent dans la direction de l'écoulement une conicité décroissante.
